# EUROPÄISCHE PATENTSCHRIFT

(11) **EP 1 904 252 B1**
(45) Veröffentlichungstag und Bekanntmachung des Hinweises auf die Patenterteilung: **25.05.2011**
(21) Anmeldenummer: 06762554.1
(22) Anmeldetag: 12.07.2006
(51) Int. Cl.: B22F 1/00, C09K 3/14, C01F 7/02

(54) **HERSTELLUNGSVERFAHREN NANOKRISTALLINER SINTERKÖRPER AUF BASIS VON ALPHA-ALUMINIUMOXID**
METHOD FOR PRODUCTION OF NANOCRYSTALLINE SINTERED BODIES MADE FROM ALPHA ALUMINIUM OXIDE
PROCEDES DE PRODUCTION DES CORPS FRITTES NANOCRISTALLINS A BASE D'OXYDE D'ALUMINIUM ALPHA

(30) Priorität: 16.07.2005 DE 102005033392
(43) Veröffentlichungstag der Anmeldung: 02.04.2008
(73) Patentinhaber: Center for Abrasives and Refractories Research & Development C.A.R.R.D. GmbH, 9524 Villach (AT)
(72) Erfinder: MÖLTGEN, Paul, 79725 Laufenburg (DE)
(74) Vertreter: Neunert, Peter Andreas
(86) Internationale Anmeldenummer: PCT/EP2006/006818
(87) Internationale Veröffentlichungsnummer: WO 2007/009646

(56) Entgegenhaltungen:
- EP-A1- 0 725 045
- GB-A- 2 184 715
- MA H ET AL: "SYNTHESIS AND PROCESSING OF NANO-ALPHA-AL2O3 POWDERS" KEY ENGINEERING MATERIALS, AEDERMANNSDORF, CH, Bd. 206-213, 9. September 2001 (2001-09-09), Seiten 43-46, XP008025131

## Beschreibung

Die vorliegende Erfindung betrifft ein Verfahren zur Herstellung von Sinterkörpern auf der Basis von α-Aluminiumoxid mit einem Gehalt von 95 bis 100 Gew.% Al₂O₃, einer relativen Sinterdichte von ≥ 97 % der theoretischen Dichte und einer Vickershärte HV_{0,2} von ≥ 17.5 GPa, deren Kristallitgefüge eine mittlere Primärkristallgröße der Al₂O₃-Kristalle von ≤ 100 nm aufweist.

Werkstoffe mit nanoskaligen Strukturen sind von großem Interesse für das Bauwesen, die Elektrotechnik, die Optik, den Maschinen- und Anlagenbau, für die Fahrzeugtechnik, die Medizintechnik, die Papierindustrie und viele weitere Industriezweige. Werkstoffwissenschaftler haben festgestellt, dass die Miniaturisierung des Gefüges von Werkstoffen teilweise zu drastischen Veränderungen der Eigenschaften dieser Werkstoffe führt. So erwartet man z. B. im Bereich der Keramik von nanostrukturierten keramischen Werkstoffen außergewöhnliche Steigerungen in Bezug auf die Härte, Zähigkeit, Bruchfestigkeit, Verschleißfestigkeit und sonstige Eigenschaften, was diesen Materialien vollkommen neue Einsatzgebiete im Bereich der o. g. Industriezweige eröffnen sollte.

In den letzten Jahren beschäftigten sich zahlreiche Arbeitskreise mit der sog. Nanotechnologie. Bis heute sind zahlreiche Methoden entwickelt worden, nanoskalige Pulver herzustellen. Nanoskalige oxidische Pulver für den Einsatz im Bereich der Keramik können durch chemische Synthese, durch mechanische Verfahren oder durch thermophysikalische Verfahren hergestellt werden.

Die chemische Synthese benutzt einfache, direkte chemische Reaktionen zur Umwandlung in Pulver. Dabei entstehen durch Manipulation der Keimbildung oder des Keimwachstums ultrafeine Partikel. Häufig liegen die Pulver in sog. Precursorformen vor, bei denen das Pulver in einer chemischen Zusammensetzung vorliegt, die nahe dem Endprodukt ist, und die endgültige Zusammensetzung erst nach einer thermischen Behandlung erreicht wird. Die chemische Synthese von oxidischen Nanopulvern erfolgt bekanntermaßen mittels Hydroxidfällung, Synthese durch Hydrolyse metallorganischer Verbindungen oder durch Hydrothermalverfahren.

Bei den mechanischen Verfahren werden kleinstmögliche Fragmente durch wiederholtes Brechen eines größeren Teils erzeugt.

Die gebildeten Partikel können dabei teilweise zwar im Größenbereich von 5 bis 100 nm liegen, allerdings ist dieses Verfähren zur Herstellung von oxidischen nanoskaligen Keramikpulvern ungeeignet, da die Mahldauer sehr hoch ist, um in diesen Feinheitsbereich vorzustoßen, die Phasenzusammensetzung meist nicht genau definiert ist und der Mahlkörperabrieb zu Verunreinigung der Produkte führt.

Wichtige Verfahren zur Herstellung nanoskaliger oxidischer keramischer Pulver sind die sog. thermophysikalischen Methoden, die auf der Einbringung von thermischer Energie zu den festen, flüssigen oder gasförmigen Ausgangsverbindungen beruhen, aus denen dann z. B. ein übersättigter Dampf gebildet wird, wobei unter Freisetzung der Lösungsmittel die nanokristallinen Partikel kondensieren. Die thermische Aktivierung kann dabei beispielsweise durch Verbrennen in Flammen, durch Plasmaverdampfung, durch Laserverdampfung, durch Mikrowellen, durch Spraypyrolyse oder ähnliche Verfahren erfolgen.

Bei spraypyrolytischen Verfahren werden beispielsweise die Ausgangsstoffe in einer Knallgasflamme versprüht und zersetzt. Ein häufiger Nachteil dieses Verfahrens sind die relativ kurzen Verweilzeiten in der Flamme, die zum Auftreten von Übergangsmodifikationen führen. Beim Prinzip der Plasmasynthese werden die Ausgangsstoffe in einem bis zu 6000 ° K heißen Plasma verdampft. Beim Abkühlen des Plasmas entstehen aus dem Gas-Dampf-Gemisch die Nanopartikel. Ein Nachteil dieses Verfahrens liegt darin, dass die Pulver häufig agglomerieren, wobei die Agglomerate sehr fest sind, so dass das Pulver selber eine breite Partikelgrößenverteilung aufweist. Die Agglomerate können nur unter großem technischen Aufwand wieder zerstört werden, was den Einsatz solcher Pulver naturgemäß stark einschränkt. Beim Einsatz des sog. Heißwandreaktors, dem CVR-Verfahren, werden die Edukte verdampft und mit definierten Strömungen im Reaktor zur Reaktion gebracht. Auch hier entstehen überwiegend Agglomerate.

α-Aluminiumoxid ist aufgrund seiner physikalischen und chemischen Eigenschaften einer der wichtigsten Rohstoffe im Bereich der Keramik. Viele der o. g. Verfahren wurden daher in der Vergangenheit eingesetzt, um nanokristallines α-Aluminiumoxidpulver herzustellen.

So wird in der EP 0 355 481 A1 die Herstellung von α-Aluminiumoxid mit einer mittleren Teilchengröße von 0,1 bis 0,2 µm beschrieben, das einen Gehalt von mehr als 50% α-Aluminiumoxid aufweist, wobei γ-Aluminiumoxid in einer Flamme thermisch behandelt wird. Das entsprechende γ-Aluminiumoxid selber kann auf pyrogenem Weg flammenhydrolytisch aus Aluminiumtrichlorid hergestellt werden.

Die EP 0 554 908 A1 beschreibt die Herstellung von nanoskaligen α-Aluminiumoxidpulvern, wobei ein Boehmit-Gel mit feinstteiligem Siliziumoxid als Kristallwachstumsinhibitor dotiert und anschließend einer thermischen Behandlung zur Umwandlung in α-Aluminiumoxid unterzogen wird. Im "Journal of Materials Science", 29 (1994), 5664 - 5672 wird die Produktion von ultrafeinen α-Aluminiumoxidpulvern sowie die Herstellung von feinstrukturierten festen Keramiken beschrieben. Die entsprechenden Pulver werden durch Hydroxidfällung in Gegenwart von α-Aluminiumoxidkeimen und Ammoniumnitrat zunächst als Hydratpulver gewonnen, die in einer anschließenden thermischen Reaktion zum α-Aluminiumoxid umgewandelt werden. Das entsprechende α-Aluminiumoxid besitzt eine Teilchengröße von 200 nm.

Im "Journal of the American Ceramic Society" 84(10), 2421-23 (2001) wird die Herstellung von nanokristallinem α-Aluminiumoxidpulver aus einer wässrigen Aluminiumnitratlösung in Gegenwart von Saccharose beschrieben. Als Produkt erhält man ein poröses nanokristallines α-Aluminiumoxid mit einer spezifischen Oberfläche von mehr als 190 m²/g und einer mittleren Porengröße zwischen 80 und 25 nm. Ebenfalls im "Journal of the American Ceramic Society" 84(12), 2849-52 (2001) wird die Herstellung von nanokristallinem α-Aluminiumoxidpulver über die Pyrolyse von organischen Komplexverbindungen des Aluminiums mit Tri-Äthanolamin beschrieben. Die mittlere Partikelgröße des Pulvers wird mit 25 nm angegeben.

Die Synthese von nanokristallinem α-Aluminiumoxidpulver aus Ammoniumaluminium-Carbonathydroxid wird im "Journal of the American Ceramic Society" 86 (8), 1321-25 (2003) beschrieben. Mit diesem Verfahren werden α-Aluminiumoxidpulver mit einer mittleren Partikelgröße zwischen 150 und 30 nm hergestellt. Es sind zahlreiche weitere Verfahren zur Herstellung von feinstteiligem α-Aluminiumoxid bekannt, die häufig jedoch nicht großtechnisch anwendbar sind oder zu Produkten mit unbefriedigenden Eigenschaften führen, so dass die zur Zeit auf dem Markt in größeren Mengen erhältlichen feinsten α-Aluminiumoxidpulver eine mittlere Partikelgröße von ca. 0,1 bis 0,3 µm aufweisen, wobei nicht zuletzt die Agglomeratbildung von kleineren Kristalliten für die Bildung dieser relativ groben Partikel verantwortlich ist.

Die Bildung von harten und nahezu unzerstörbaren Agglomeraten ist überhaupt eines der größten Probleme bei der Herstellung und der verarbeitung von nanoskaligen α-Aluminiumoxidpulvern.

Einen Ansatz zur Umgehung dieser Probleme bietet das sog. "Sol-Gel-Verfahren", bei dem Boehmit-Teilchen mit einem mittleren Durchmesser von ca. 20 nm kolloidal in saurem, wässrigem Medium gelöst und zu einem Gel umgesetzt werden, das anschließend getrocknet, kalziniert und gesintert wird. Bei gleichzeitigem Einsatz von α-Aluminiumoxidkeimen gelingt es so, die zur Verdichtung notwendige Sintertemperatur auf ca. 1200 bis 1300°C zu senken und damit ein Kristallwachstum beim Sintern weitgehend zu unterdrücken. Auf diese Weise können Keramikkörper hergestellt werden, die ein Kristallitgefüge mit einem mittleren Partikeldurchmesser der Aluminiumoxidkristalle von ca. 0,2 bis 0,4 µm aufweisen. Ein Nachteil dieses Verfahrens besteht in dem enormen Volumenschwund während der Umsetzung vom Gel zum fertig gesinterten Produkt, so dass es nahezu unmöglich ist, großtechnisch über dieses Verfahren harte und dichte Formkörper herzustellen. Bewährt hat sich das Verfahren allerdings zur Herstellung von gesinterten Schleifkörnern, da an derartige Keramikkörper in Bezug auf die Form und die Größe nur geringe Anforderungen gestellt werden und die Schleifkörner in einem Korngrößenbereich unterhalb von 6 mm in nahezu allen Formen und Größen einsetzbar sind.

So werden in der EP 0 152 768 B1 Schleifkörner offenbart, die über die Sol-Gel-Technik bei Sintertemperaturen von ca. 1400° hergestellt werden. Als Sinterhilfe werden Kristallisationskeime eingesetzt. Ähnliche Verfahren und Stoffe gehen aus der EP 0 024 099 A1, DE 3 219 607 A1, US 4, 518, 397 A, US 4,574,003 A, US 4,623,364 A, EP 0 168 606 A1, EP 0 200 487 A1, EP 0 228 856 A1, EP 0 209 084 A1 und der EP 0 263 810 A1 hervor. Allen letztgenannten Verfahren ist gemeinsam, dass sie über ein Sol-Gel-Verfahren, ausgehend von feinstdispersem Aluminiumoxidmonohydrat des Typs Boehmit, durchgeführt werden.

Zur Verdichtung der Materialien sind Sintertemperaturen im Bereich von 1200 bis 1500°C erforderlich. Um bei diesen recht hohen Temperaturen das Kristallwachstum einzuschränken, werden Kristallwachstumsinhibitoren, Sinteradditive oder Kristallisationskeime zugesetzt. Obwohl nanoskaliger Boehmit als Ausgangsstoff eingesetzt wird und man in homogener wässriger Suspension arbeitet, in der die Teilchen gleichmäßig verteilt sind, gelingt es trotz all dieser Maßnahmen nicht, die Kristallitgröße im gesinterten Produkt wesentlich weiter als auf die oben genannten 0,2 bis 0,4 µm einzuschränken. Eines der feinsten über die Sol-Gel-Technologie gewonnenen Gefüge bei einem Schleifkorn wird in der EP 0 408 771 B1 beschrieben, bei der ausgehend von Boehmit unter Einsatz von besonders feinen α-Aluminiumoxidkeimen und einem speziellen Sinterprogramm, harte und dichte Schleifkörner mit einer Gefügestruktur realisiert werden, die einen mittleren Teilchendurchmesser von bis zu 0,12 µm aufweisen. Ein derart feines Gefüge kann jedoch nur aufgrund enorm langer Sinterzeiten und eines genau definierten Sinterprogramms realisiert werden. Für eine kostengünstige großtechnische Produktion sind diese Bedingungen nicht geeignet.

Ganz allgemein hat das Sol-Gel-Verfahren den Nachteil, dass ein relativ teurer Boehmit als Rohstoff eingesetzt werden muss, der durch Hydrolyse von Aluminiumalkoholaten gewonnen wird. Ein weiterer Nachteil des Verfahrens ist, däss mit relativ großen Verdünnungen gearbeitet wird, was dazu führt, dass beim späteren Trocknen, Kalzinieren und Sintern große Mengen an Wasser verdampft werden müssen, wozu entsprechend viel Energie notwendig ist. Hinzu kommt, dass der beim Sol-Gel-Verfahren eingesetzte Boehmit im stark sauren Medium dispergiert werden muss, wobei als Säure Salpetersäure eingesetzt wird, die beim Kalzinieren in Form von nitrosen Gasen wieder freigesetzt wird und mit entsprechendem technischen Aufwand wieder aufgefangen werden muss, um eine Belastung der Umwelt zu vermeiden.

Um diese Nachteile des Sol-Gel-Verfahrens zu vermeiden, hat man versucht, direkt ausgehend vom α-Aluminiumoxid über bekannte keramische Technologien, wie z. B. Schlickerguß, trockenes Verpressen, Extrudieren oder andere Technologien zu einer mikrokristallinen Sinterkorundkeramik zu kommen. So wird in der EP 0 725 045 B1 ein Verfahren zur Herstellung gesinterter α-Aluminiumoxidkörpern beschrieben, wobei ein relativ preiswertes α-Aluminiumoxidpulver mit einer mittleren Korngröße unter 3 µm als Ausgangsmaterial eingesetzt wird und zu einem Schlicker mit einer Partikelgröße unter 1 µm vermahlen wird. Der Schlicker wird über eine Sprühtrocknung zu einem leicht dispergierbaren Sprühgranulat verarbeitet, das anschließend zu einem Grünkörper mit einer Dichte von ≥ 60% der theoretischen Dichte verpresst wird. Der Grünkörper wird einer Schocksinterung bei Temperaturen im Bereich von 1300 bis 1550°C unterzogen, wobei die Teilchen bevorzugt nur wenige Sekunden der maximalen, für die Verdichtung notwendigen Temperatur ausgesetzt sind, so dass ein Kristallwachstum während der Sinterung weitgehend unterdrückt werden kann. Zwar gelingt es mit diesem Verfahren, ein Kristallwachstum während der Sinterung zu vermeiden, jedoch ist das Gefüge des Sinterkörpers naturgemäß durch die Partikelgröße des eingesetzten Ausgangspulvers bestimmt, das durch Vermahlung gewonnen wird, eine Technologie, der natürliche Grenzen gesetzt sind. Es gelingt nicht, auf diese Weise kostengünstig ein α-Aluminiumoxidpulver herzustellen, mit dem vergleichbare Resultate erzielt werden können, wie sie mit der Sol-Gel-Technologie erreicht werden. Kostengünstige nach diesen Verfahren hergestellte Pulver weisen eine mittlere Primärkristallgröße von ca. 0,4 µm - 0,6 µm auf.

Ebenfalls auf einer konventionellen keramischen Technologie beruht das in der DE 198 09 679 A1 beschriebene Verfahren, bei dem ein polykristallines gesintertes keramisches Schleifmittel über druckloses Flachgießen eines Schlickers gewonnen wird. Nach dem Entgasen, Trocknen und Zerkleinern der gegossenen Schicht zu einem Vorprodukt und dem Sintern des Vorprodukts erhält man ein Schleifkorn mit einer mittleren Korngröße von ≤ 0,8 µm. Auch nach diesem Verfahren liegt man somit in einem Kristallitgrößenbereich, der deutlich über dem der Sol-Gel-Korunde liegt. Die Erfahrung hat jedoch gezeigt, dass die Schleifleistung mit der Kristallitgröße korreliert und sich dabei umgekehrt proportional zur Kristallitgröße verhält. Eine mit dem Sol-Gel-Korund vergleichbare Leistung ist von dem nach der DE 1 98 09 679 A1 gefertigten Schleifkorn nicht zu erwarten. Ein weiterer Nachteil des in der DE 1 98 09 679 A1 beschriebenen Verfahrens liegt darin, dass immer noch relativ teure Rohstoffe eingesetzt werden müssen, selbst um ein verhältnismäßig grobes Gefüge zu erhalten.

In der EP 0 756 586 B1 wird ein Sinterkörper beschrieben, der ein mittleres Gefüge von 0,4 µm aufweist (Beispiel 2). Um dieses mit den Söl-Gel-Korunden in etwa vergleichbare Gefüge zu erreichen, muss eine Tonerde mit einem mittleren Partikeldurchmesser von 0,12 µm eingesetzt werden, aus der eine Suspension gefertigt wird, die dann schrittweise entwässert und anschließend zu Formkörpern verpresst wird. Diese Formkörper werden anschließend drucklos bei 1350°C gesintert. Der Nachteil des Verfahrens ist darin zu sehen, dass zum einen beim Sintern ein Kristallwachstum stattfindet und ein Schleifkorn mit einer mittleren Gefügegröße von 0,4 µm immer noch deutlich gröber ist als ein konventioneller Sol-Gel-Korund, zum anderen müssen sehr teure α-Aluminiumoxidpulver eingesetzt werden, um zu diesem Ergebnis zu kommen. Als Verfahren zur Herstellung eines kostengünstigen Sinterkorundes ist das oben beschriebene Verfahren somit ungeeignet.

Es bestand somit weiterhin die Nachfrage nach einem preiswerten und leistungsstarken polykristallinen feinkörnig aufgebauten Sinterkorund auf Basis von α-Al₂O₃, der vom Preis-Leistungs-Verhältnis her den Sol-Gel-Korunden überlegen ist.

Aufgabe der Erfindung ist es somit, ein Verfahren zur Herstellung eines Sinterkörpers auf Basis von α-Aluminiumoxid zur Verfügung zu stellen, das die oben beschriebenen Nachteile des Standes der Technik nicht aufweist.

Gelöst wird diese Aufgabe ein Verfahren mit den Merkmalen nach Anspruch 1.

Die Autoren Hongwei Ma und Andreas Krell beschreiben in "Synthesis and processing of nano α-Al2O3 powders", Key Engineering Materials Vols. 206 bis 213 (2002) pp. 43 bis 46 (2002), Trans Tech Publications, Switzerland, die Verarbeitung von α-Aluminiumoxidpulvern. In der GB 2184715 A wird die Herstellung von Aluminiumoxid aus basischem Aluminiumchlorid beschrieben. Hongwei Ma beschreibt in "Synthesis of nanosized α-Al2O3 powders and fabrication of nanocrytalline alumina ceramics", 2002, XP001247681 die Verarbeitung von α-Aluminiumoxid-Nanopartikeln.

Weiterbildungen und Ausgestaltungen des Erfindergedankens sind Gegenstand der Unteransprüche.

Die Lösung der Aufgabe lässt sich in zwei Teilschritte unterteilen. In einem ersten Schritt sollte ein entsprechend feinkristalliner und kostengünstiger Rohstoff gefunden werden, der in einem zweiten Schritt dann zum nanokristallinen Sinterkörper verarbeitet werden kann.

Nachdem sich die Arbeiten in den letzten Jahren zur Entwicklung von Schleifkörnern hauptsächlich auf Sol-Gel-Verfahren konzentriert hatten, wobei sich in den letzten 20 Jahren seit der oben erwähnten EP 0 408 771 B1 keine signifikanten und bahnbrechenden Verbesserungen in Bezug auf das Gefüge mehr gezeigt hatten, konzentrierten sich die Arbeiten im Rahmen der vorliegenden Erfindung auf die Suche nach einem kostengünstigen nanoskaligen α-Aluminiumoxidpulver, das sich zu einer harten und dichten nanoskaligen Alumniumoxidkeramik verarbeiten lässt. Im Rahmen der vorliegenden Arbeiten wurden dazu eine Vielzahl von auf dem Markt erhältlichen α-Aluminiumoxidnanopulver getestet. Keines der Pulver konnte die Kriterien für einen erfolgreichen Einsatz (Preis, Verarbeitbarkeit und Phasenreinheit) erfüllen, so dass zunächst ein passender Rohstoff entwickelt werden musste.

Im Rahmen dieser Entwicklungsarbeiten wurde überraschenderweise gefunden, dass basisches Aluminiumchlorid in Gegenwart von Kristallisationskeimen bei relativ niedrigen Temperaturen innerhalb weniger Minuten vollständig zu α-Aluminiumoxid umgesetzt werden kann, das eine Partikelgröße von 20 bis 100 nm aufweist.

Basische Aluminiumchloride (Aluminiumchlorohydrat) mit der allgemeinen chemischen Formel Al₂(OH)ₙCl_{z}, wobei n eine Zahl zwischen 2,5 und 5,5 und z eine Zahl zwischen 3,5 und 0,5 ist und die Summe n+z stets 6 beträgt, finden auf den verschiedensten Sektoren Anwendung. Sie werden z. B. als wirksame Bestandteile in kosmetischen Zubereitungen wie Antitranspirantien oder Adstringentien eingesetzt. Ihre Verwendung erstreckt sich aber auch auf die Hydrophobierung von Textilien und die Wasseraufbereitung. Darüber hinaus werden sie in feuerfesten Materialien, in anorganischen Fasern, sowie zur Herstellung von Katalysatoren auf Aluminiumoxidbasis eingesetzt. Verfahren zur Gewinnung basischer Aluminiumchloride werden in der DE 2 309 610 A, der DE 1 567 470 A, der DE 1 102 713 B, der DE 2 518 414 sowie der DE 2 713 236 B2 beschrieben. Im Rahmen der vorliegenden Erfindung wurde ein basisches Aluminiumchlorid eingesetzt, das durch Umsetzen wässriger Lösungen von niedriger basischer Aluminiumchloride mit metallischem Aluminium in Gegenwart eines Aktivierungsmittels gewonnen wurde. Bei der Herstellung fällt das basische Aluminiumchlorid zunächst als verdünnte wässrige Suspension an.

Bei der Entwicklung des Rohstoffes für den erfindungsgemäßen Sinterkörper auf Basis von α-Aluminiumoxid wurde nun die bei der Herstellung von basischem Aluminiumchlorid anfallende Suspension mit Kristallisationskeimen versetzt. Dabei wurden vorzugsweise ultrafeine α-Aluminiumoxidkristallite eingesetzt, die durch Nassvermahlung von α-Aluminiumoxid mit Aluminiumoxidkugeln in einer Attritormühle und anschließender Zentrifugalabscheidung der groben Partikel erhalten wurden. Die Grobpartikel wurden dabei in einem Umfang abgetrennt, dass die Partikelgröße der in der Suspension verbleibenden α-Aluminiumoxidteilchen unter 100 nm lag. Diese α-Aluminiumoxidteilchen wurden in Form einer Suspension der Suspension des basischen Aluminiumchlorids in einer Menge zwischen 0,5 und 5 Gew.-%, vorzugsweise ca. 2 Gew.-%, bezogen auf den α-Aluminiumoxidgehalt im festen Endprodukt, zugegeben. Neben Aluminiumoxid können auch andere Kristallisationskeime, die ein Korundgitter aufweisen, wie z. B. Fe₂O₃-Keime, eingesetzt werden.

Die Suspension wurde anschließend zur Trockene eingedampft und dann einer thermischen Behandlung zur Umwandlung des basischen Aluminiumchlorids in α-Aluminiumoxid unterzogen. Mittels DTA-Kurven konnte aufgezeigt werden, dass bei der thermischen Behandlung des getrockneten und mit Keimen versetzten basischen Aluminiumchlorids die Umwandlungstemperatur zum α-Aluminiumoxid durch den Zusatz von Keimen um ca. 170°C von ca. 1140° C auf ca. 970°C gesenkt werden konnte. Dadurch gelingt es bei Temperaturen unterhalb von 1050°C eine vollständige Umwandlung zum α-Aluminiumoxid zu erreichen. Bei dieser Umsetzung werden große Mengen HCl und Wasser freigesetzt, die mit entsprechenden Wäschern aufgefangen werden müssen.

Überraschenderweise ist die Partikelgröße des erhaltenen Produktes nahezu unabhängig von der Art der thermischen Behandlung. So wird mit komplizierten thermophysikalischen Verfahren ebenso wie durch einfaches Sintern im Muffelofen eine Partikelgröße der α-Aluminiumoxidteilchen im Bereich von 20 bis 100 nm erreicht. In sämtlichen Fällen sind die dabei erhaltenen Agglomerate relativ leicht wieder zerstörbar, so dass sich für eine spätere Produktion eine konventionelle thermische Behandlung, wie z. B. in einem Drehrohrofen, anbietet.

Das nach der thermischen Behandlung erhaltene Produkt weist eine Partikelgröße zwischen 20 und 100 nm auf und liegt in Form von weichen, leicht zerstörbaren Agglomeraten vor.

Die Dauer der thermischen Behandlung beträgt weniger als 30 Minuten. Die Korundbildung setzt bereits bei 500°C ein. Um jedoch die Ausbeute an Nano-α-Al₂O₃ hoch zu halten und den Chlorgehalt niedrig zu halten, wird man bevorzugt in einem Temperaturbereich zwischen 700 und 1100°C, insbesondere zwischen 1000 und 1100°C arbeiten.

Wahlweise können der Suspension des basischen Aluminiumchlorids vor der thermischen Behandlung ein oder mehrere Oxidbildner zugesetzt werden. Als Oxidbildner eignen sich besonders die Chloride, Oxychloride, Hydroxychloride und/oder Nitrate eines oder mehrerer Vertreter aus der Gruppe Eisen, Kupfer, Nickel, Zink, Kobalt, Strontium, Barium, Beryllium, Magnesium, Kalzium, Lithium, Chrom, Silizium, Mangan, Hafnium, Zirkon, Titan, Vanadin, Gallium, Niob, Bor und/oder Seltene Erden. Diese Materialien sind als Additive für Schleifkörner besonders geeignet und können auf diese Weise bereits als Vorstufe homogen verteilt dem Ausgangsstoff für das spätere Endprodukt zugegeben werden. Die Umwandlung zum Oxid erfolgt bei diesen Materialien ebenfalls bei der thermischen Behandlung, wobei einige dieser Materialien sogar als Sinterhilfsmittel dienen können. Die Menge an zugesetzten Oxiden bzw. Oxidbildnern wird so gewählt, dass im späteren Endprodukt maximal 5 Gew.%, bezogen auf den Gehalt an α-Aluminiumoxid, an zusätzlichem Oxid im Endprodukt enthalten sind.

Wie schon oben erwähnt wurde, ist das Produkt nahezu unabhängig von der Art der thermischen Behandlung, und es können neben dem Drehrohrofen sämtliche bekannten Verfahren zur Temperaturbehandlung, wie z. B. ein Wirbelschichtreaktor, ein Durchschubofen, ein Kammerofen, ein Rohrofen oder ein Mikrowellenofen eingesetzt werden.

Neben diesen konventionellen Verfahren können natürlich auch weitere thermische Verfahren eingesetzt werden, die gerade im Zusammenhang mit der Herstellung von Nanopartikeln häufig praktiziert werden. So können die bekannten thermophysikalischen Verfahren eingesetzt werden, wobei das basische Aluminiumchlorid vorzugsweise als Suspension eingesetzt wird, aus der dann ein übersättigter Dampf gebildet wird, aus dem unter Freisetzung des Lösungsmittels nanokristalline Partikel kondensieren. Auch hier bilden sich Agglomerate, die jedoch ebenfalls leicht zerstörbar sind.

Ein Nachteil sämtlicher thermophysikalischer Verfahren besteht jedoch darin, dass im Vergleich zu einem konventionellen Drehrohrofen nur relativ geringe Durchsätze realisiert werden können, so dass sich die Kosten für das Produkt bei Einsatz von thermophysikalischen Verfahren erhöhen. Dennoch sind diese Verfahren nicht uninteressant, da mit ihrer Hilfe eine genauere Temperaturführung als im Drehrohr möglich ist und so die Qualität des Nanopulvers zusätzlich optimiert werden kann.

Die nach der Temperaturbehandlung erhaltenen Agglomerate werden in einem anschließenden Schritt desagglomeriert, wobei sämtliche in der Keramik bekannten Desagglomerationsverfahren eingesetzt werden können, da es sich im vorliegenden Fall um relativ leicht zerstörbare Agglomerate handelt. Vorzugsweise wird zur Desagglomeration eine Nass- oder Trockenmahlung durchgeführt, wobei die Nassmahlung vorzugsweise in einem Attritor erfolgt, während die Trockenmahlung in einer Luftstrahlmühle durchgeführt wird. Da die bei der Mahlung als Produkt angestrebten Nanopartikel äußerst reaktiv sind, werden vorzugsweise vor oder während der Mahlung Additive zugesetzt, die eine erneute Agglomeration der Nanoteilchen verhindern. Besonders günstig ist es daher, die anschließende Desagglomeration in Form einer Nassmahlung durchzuführen, bei der durch Einsatz entsprechender Dispergierhilfen und Stabilisatoren eine erneute Agglomeration der Teilchen leicht verhindert werden kann. Vorteilhaft ist es auch, während der Nassmahlung zusätzlich Additive einzusetzen, die sich an der Oberfläche der Teilchen anlagern und eine Agglomeration auch bei einem anschließenden Trocknungsschritt verhindern. Geeignete Materialien dafür sind Wachse und Stearate, die vorteilhaft in Form von Nanoteilchen zugesetzt werden.

An dieser Stelle des Verfahrens können auch zusätzliche oxidische Additive zugefügt werden, die dann während der Vermahlung und Desagglomeration homogen mit dem α-Aluminiumoxidpulver vermischt werden. Als oxidische Additive können vorteilhaft ein oder mehrere Vertreter aus der Gruppe der Oxide des Eisens, Kupfers, Nickels, Zinks, Kobalts, Strontiums, Bariums, Berylliums, Magnesiums, Kalziums, Lithiums, Chroms, Siliziums, Mangans, Hafniums, Zirkons, Titans, Vanadins, Galliums, Niobs, Bors und/oder der Seltenen Erden eingesetzt werden. Dabei sollten die Mengen an zusätzlichem Oxid insgesamt maximal 5 Gew.%, bezogen auf den Gehalt an α-Aluminiumoxid im Feststoff betragen. Dieser Zusatz von Oxiden während der Mahlung kann alternativ oder parallel zu dem vorher beschriebenen Zusatz von Oxidbildnern in der Suspension erfolgen. Dabei ist dann allerdings zu beachten, dass insgesamt die Menge an Oxid im Endprodukt nicht über 5 Gew.-%, bezogen auf den α-Aluminiumoxid-Feststoffgehalt, liegen sollte.

Aufgrund der oben beschriebenen Agglomerationsneigung der Nanopulver und der erforderlichen Maßnahmen gegen eine solche Agglomeration, um eine Verarbeitbarkeit des Pulvers im Sinne der Erfindung zu gewährleisten, ist die Nassvermahlung ein besonders geeignetes Mittel für die Desagglomeration. Zur Nassmahlung eignen sich Vibrationsmühlen, Attritoren, Kugelmühlen, Rührwerkskugelmühlen oder ähnliche Vorrichtungen. Als besonders vorteilhaft hat sich dabei der Einsatz von Rührwerkskugelmühlen gezeigt. Die Mahldauer hängt von der Festigkeit der Agglomerate selber ab und liegt beim erfindungsgemäßen Verfahren üblicherweise zwischen 2 und 6 Stunden. Die Nassvermahlung oder Desagglomeration wird vorteilhaft im wässrigen Medium durchgeführt, es können jedoch auch alkoholische oder andere organische Lösungsmittel eingesetzt werden.

Wird die Desagglomeration mittels einer Nassvermahlung durchgeführt, eröffnen sich grundsätzlich zwei Möglichkeiten der Weiterverarbeitung des desagglomerierten Produktes. Zum einen kann das als Suspension vorliegende Nanopulver mit entsprechenden keramischen Formgebungsverfahren direkt zum Grünkörper weiterverarbeitet werden, zum andern wird zunächst eine Trocknung durchgeführt und das getrocknete Pulver wird anschließend zum Grünkörper verarbeitet.

Im Falle der direkten Verarbeitung der Suspension kommen als keramische Formgebungsverfahren insbesondere der Schlickerguss und die elektrophoretische Abscheidung in Frage. Es ist allerdings auch möglich, die Suspension, in der das Nanopulver weitestgehend homogen verteilt als Einzelteilchen vorliegt, zu trocknen und dabei die Neigung zur Agglomeratbildung der Nanoteilchen auszunützen. Bei der Trocknung fällt ein kompakter fester Grünkörper an, der anschließend weiterverarbeitet werden kann. Ähnliche Grünkörper erhält man über den Schlickerguss und die elektrophoretische Abscheidung.

Ein interessantes Verfahren direkt aus der Suspension ist auch die Sprühgranulierung, bei der die Suspension mit einem Binder vermischt direkt zu festen Granulaten versprüht wird.

Will man eine hohe Verdichtung im Grünkörper erreichen, so kann man auch auf Formgebungsverfahren zurückgreifen, die auf dem Einsatz von Pulvern basieren. Das bedeutet im vorliegenden Fall für die Desagglomeration durch Nassmahlung, dass die Suspension anschließend getrocknet und dann das getrocknete Pulver weiterverarbeitet werden muss. Für die Trocknung der Suspension kommen sämtliche bekannten Trocknungsverfahren in Frage, besonders vorteilhaft kann die Sprühtrocknung eingesetzt werden, bei der das Pulver nach der Trocknung in Form von sog. Sprühgranulaten vorliegt. Bei sämtlichen Trocknungsverfahren für die Suspension muss allgemein darauf geachtet werden, dass keine harten Agglomerate ausgebildet werden, was beispielsweise durch entsprechende Zusätze in der Suspension vermieden werden kann.

Die Verdichtung und Weiterverarbeitung des Pulvers kann über alle in der Keramik bekannten Formgebungsverfahren erfolgen. Als Beispiel können, ohne dass darin eine Einschränkung zu sehen ist, Schlickerguss, kaltisostatisches Pressen, Heißpressen, heißisostatisches Pressen, Zentrifugalabscheidung, uniaxiales Verpressen, Spritzgießen und Extrudieren, genannt werden. Als besonders vorteilhaft, insbesondere für die Herstellung von Schleifkörnern, hat sich das Brikettieren mit Hilfe eines Kompaktors gezeigt. Durch geeignete Wahl der Kompaktierwalzen gelingt es, die Form und Größe der entstehenden Pellets schon weitgehend ihrem späteren Verwendungszweck als Schleifkorn anzupassen. Mit Hilfe der Kompaktierwalzen gelingt es, Grünkörper mit extrem hohen Gründichten zu erhalten, wodurch die spätere Sinterung erleichtert wird.

Unabhängig davon, nach welchen Formgebungsverfahren die Grünkörper erhalten wurden, werden diese vor der Sinterung vorteilhaft auf eine Partikelgröße zerkleinert, die den üblichen Korngrößen für Schleifkörner entspricht und mit der die gewünschten Schleifkörnungen abgedeckt werden können. Da die gröbsten Schleifkörner einen maximalen Partikeldurchmesser von ca. 4 mm aufweisen, werden die Grünkörper vor der Sinterung vorteilhaft auf ein Kornband von 6 mm und feiner zerkleinert.

Bei einer besonders vorteilhaften Ausführungsform der vorliegenden Erfindung wird die Suspension direkt verarbeitet und die Trocknung der Suspension des desagglomerierten Pulvers erfolgt über eine Sprühgranulierung, wobei sich eine anschließende Zerkleinerung erübrigt, da mit diesem Verfahren hochdichte Sprühgranulate mit definierter Größe erhalten werden können, die eine zusätzliche Verdichtung und anschließende Zerkleinerung des Sprühgranulats überflüssig machen. Die so erhaltenen Sprühgranulate können direkt zur Sinterung eingesetzt werden. Zur Herstellung eines Schleifkorns muss der Durchmesser der Sprühgranulate, die aufgrund des Herstellverfahrens als Kugel anfallen, ausreichend groß gewählt werden, damit eine anschließende Zerkleinerung der gesinterten Kugeln zu gewünschten den Körnern mit den für ein Schleifkorn erforderlichen Ecken und Schneidkanten führen kann. Die so erhaltenen dicht gesinterten Kugeln können daneben für Spezialanwendungen, wie z. B. als Mahlkugeln, eingesetzt werden.

Die Sinterung der zerkleinerten Grünkörper erfolgt bei Temperaturen zwischen 1200°C und 1500°C. Dabei hat es sich als vorteilhaft herausgestellt, wenn die Grünkörper möglichst schnell die zum Verdichten erforderliche Sintertemperatur erreichen und dann möglichst kurz in dem Bereich der maximalen Sintertemperatur verweilen. Für die Sinterung eignen sich somit sämtliche Ofentypen bzw. Sinterverfahren besonders, die ein schlagartiges Aufheizen des Grünkörpers ermöglichen. Vorteilhaft können direkt und indirekt beheizte Drehrohröfen, Pendelöfen, Durchschuböfen, Wirbelschichtsinteröfen oder Mikrowellensinteröfen, eingesetzt werden. Die Haltezeit bei der Sinterung in der heißen Zone beträgt weniger als 60 Min., bevorzugt weniger als 30 Min., besonders bevorzugt weniger als 15 Min. Vorteilhaft sollten die Sinterkörper in weniger als 60 Sek., bevorzugt in weniger als 30 Sek., besonders bevorzugt in weniger als 10 Sek. auf die erforderliche Sintertemperatur gebracht werden.

Aufgrund der homogenen Partikelverteilung im Grünkörper und mit Hilfe des schnellen Aufheizens bei der Sinterung und der kurzen Haltezeiten gelingt es, das Kristallwachstum während der Sinterung nahezu vollständig zu unterdrücken. Man erhält harte und dichte Sinterkörper, deren Kristallitgefüge nahezu allein durch die Partikelgröße der Ausgangsstoffe geprägt ist.

Da erfindungsgemäß äußerst feinteilige Ausgangsmaterialien eingesetzt werden mit Partikelgrößen im Bereich zwischen 20 und 100 nm, gelingt es auf diese Weise, die angestrebten Sinterkörper, deren Kristallitgefüge eine mittlere Primärkristallgröße von ≤ 100 nm aufweisen, zu erhalten.

Im Folgenden wird die Erfindung anhand von Abbildungen und Beispielen näher erläutert, wobei:
- Figur 1: eine Differentialthermoanalyse des Ausgangsstoffes mit und ohne Keime wiedergibt,
- Figur 2: ein Röntgendiffraktogram des Zwischenproduktes nach einer Temperaturbehandlung bei ca. 1000°C, und
- Figur 3: ein Ablaufschema des Verfahrens wiedergibt.

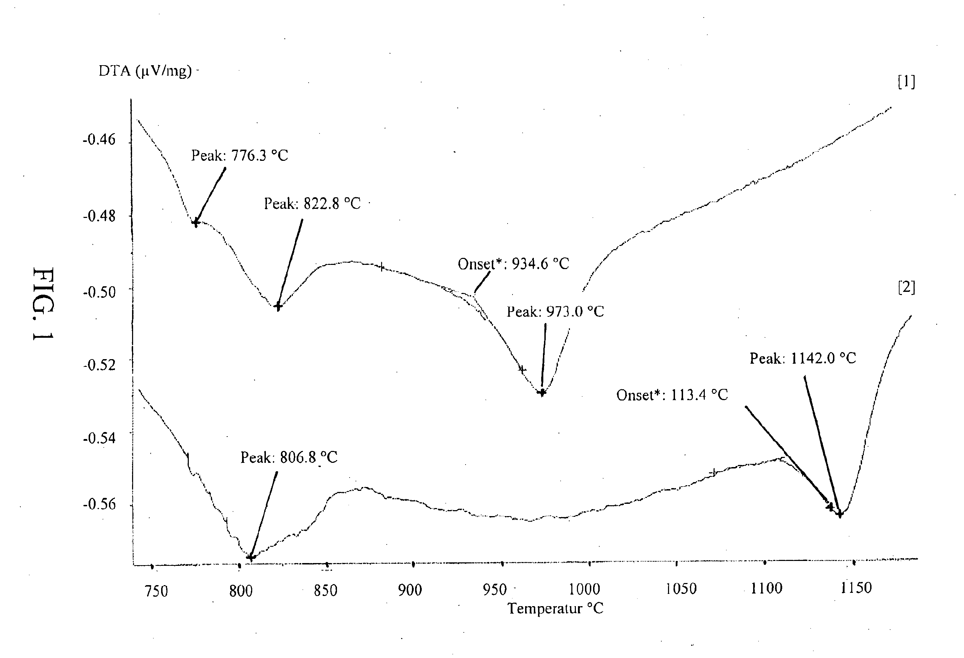

Wie aus der Figur 1 zu erkennen ist, ist das mit Keimen versetzte Ausgangsmaterial, dessen DTA-Kurve mit der Ziffer 1 gekennzeichnet ist, bei 973°C vollständig in α-Aluminiumoxid umgewandelt. Das heißt, dass die Umwandlungstemperatur durch den Zusatz der Keime um ca. 170°C im Vergleich zum ungekeimten Material, das in der Kurve 2 wiedergegeben ist, gesenkt werden konnte.

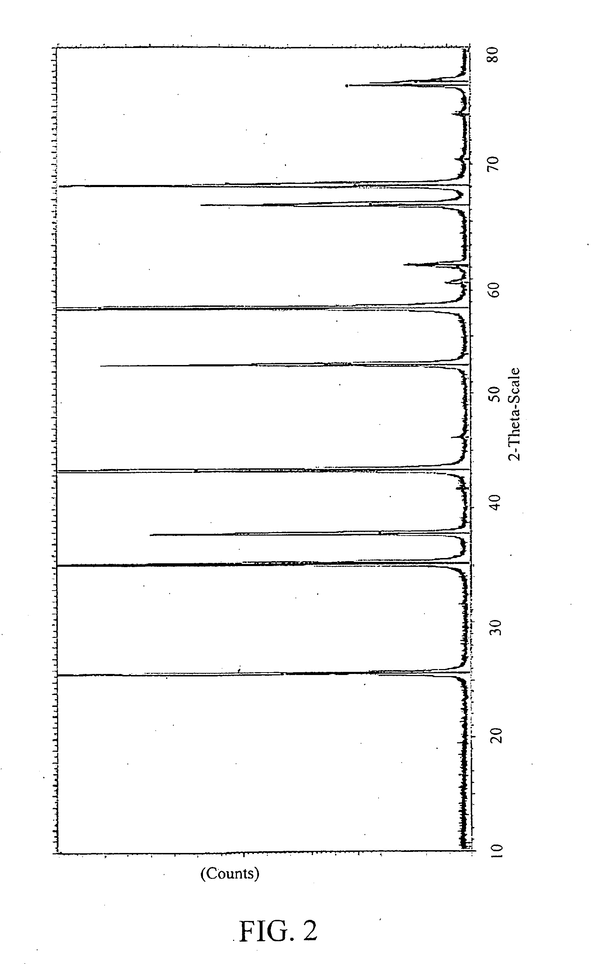

Die Abbildung 2 zeigt ein Röntgendiffraktogramm eines Pulvers, das ausgehend vom basischen Aluminiumoxid, das mit 2% Kristallisationskeimen versetzt wurde und einer Temperaturbehandlung bei 1000°C unterzogen wurde, erhalten wurde. Man erkennt, dass das basische Aluminiumoxid vollständig in α-Aluminiumoxid umgewandelt ist. Es sind keine Verunreinigungen mit irgendwelchen Übergangstonerden mehr zu erkennen.

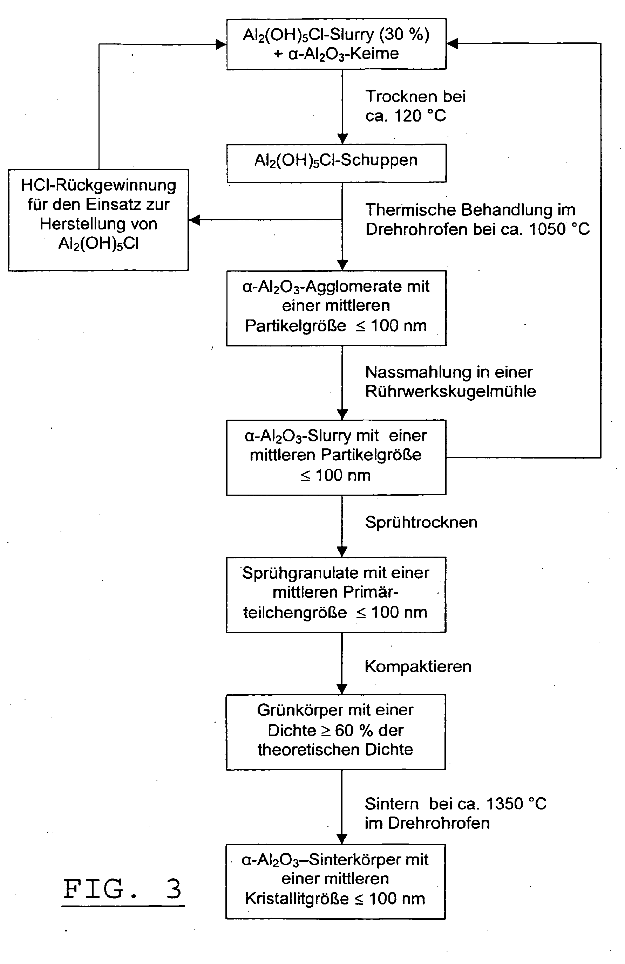

Die Figur 3 zeigt in einer Übersicht beispielhaft das Ablaufschema bei der Herstellung eines erfindungsgemäßen Sinterkörpers mit einer mittleren Kristallitgröße von ≥ 100 nm. Die in diesem Beispiel wiedergegebenen konkreten Verfahrensschritte beziehen sich auf eine bevorzugte Ausführungsform der Erfindung, die angelehnt ist an Beispiel 1, und sind nicht als Einschränkung derselben zu sehen.

Wie aus der Figur 3 zu erkennen ist, wird zunächst eine mit α-Aluminiumoxid-Keimen versetzte Slurry von basischem Aluminiumchlorid bei ca. 120°C mit Dampf getrocknet, wobei beispielsweise ein Trommeltrockner eingesetzt wird. Bei diesem Verfahrensschritt fällt das basische Aluminiumchlorid in Form von Schuppen an, die anschließend einer thermischen Behandlung bei 1050°C im Drehrohrofen unterzogen werden. Bei der thermischen Behandlung wird das basische Aluminiumchlorid zersetzt und es fällt neben α-Aluminiumoxid eine große Menge an Salzsäure an, die aufgefangen und wieder zur Herstellung von basischem Aluminiumchlorid eingesetzt wird. Pro Kilogramm getrockneter Al₂(OH)₅Cl-Schuppen erhält man in diesem Schritt ca. 470 g α-Aluminiumoxid und 530 g Salzsäure. Ca. 50% des Gewichtes der Al₂(OH)₅Cl-Schuppen ist auf das chemisch gebundene Wasser sowie das angelagerte Kristallwasser, das bei der thermischen Behandlung verdampft wird, zurückzuführen.

Das nach der thermische Behandlung erhaltene α-Aluminiumoxid besteht aus Agglomeraten. Die mittlere Partikelgröße der α-Aluminiumoxidteilchen in den Agglomeraten liegt zwischen 20 und 100 nm. Die Agglomerate selber sind relativ weich und können vorteilhaft über eine Nassmahlung in einer Rührwerkskugelmühle desagglomeriert werden. Bei diesem Schritt erhält man eine α-Al₂O₃ Slurry mit einzelnen Teilchen mit einer Partikelgröße zwischen 20 und 100 nm. Diese Teilchen sind sehr reaktiv und man setzt vorteilhaft eine Dispergierhilfe oder sonstige Additive bei der Nassmahlung hinzu, um ein erneute Agglomeratbildung zu vermeiden. Die Slurry wird anschließend in einem Sprühtrockner getrocknet und man erhält Sprühgranulate, deren mittlere Primärteilchengröße unter 100 nm liegt.

Es ist vorteilhaft, vor der Sprühtrocknung Additive zuzusetzen, die sich auf der Oberfläche der Einzelteilchen anlagern und diese daran hindern, sich zu festen Agglomeraten zusammenzulagern. Auf diese Weise erhält man weiche, leicht disperdierbare Sprühgranulate, die anschließend zu Grünkörpern verdichtet werden können. Im vorliegenden Ablaufschema erfolgt die Verdichtung über ein Kompaktierschritt, dabei Grünkörper mit einer Dichte erhalten, die deutlich über 60% der theoretischen Dichte liegt.

Die nach dem Kompaktieren erhaltenen Pellets werden auf eine Teilchengröße ≤ 6 mm vorzerkleinert und anschließend bei ca. 1350°C in einem Drehrohrofen gesintert. Bei der Sinterung erhält man α-Al₂O₃-Sinterkörper mit einer mittleren Kristallitgröße von ≤ 100 nm. In einem weiteren Klassierschritt (Zerkleinern, Sieben) erhält man eine Schleifkörnung, die besonders geeignet ist für den Einsatz in Schleifmitteln auf Unterlagen und gebundenen Schleifmitteln.

Im Folgenden wird die Erfindung anhand von Beispielen näher erläutert; diese Beispiele beziehen sich auf bevorzugte und vorteilhafte Ausführungsformen und sind nicht als Einschränkung der Erfindung gedacht.

### Beispiel 1

Als Ausgangsstoff zur Herstellung von nanokristallinem α-Al₂O₃ wurde ein im Handel unter dem Namen Locron^{®} L erhältliches basisches Aluminiumchlorid der Fa. Clariant AG, Gersthofen (Deutschland) eingesetzt. Das basische Aluminiumchlorid wird als 50 %ige wässerige Lösung angeboten und besitzt eine chemische Zusammensetzung, die der Formel Al₂(OH)₅Cl x 2-3 H₂O entspricht. Daraus folgt, dass die 50 %ige wässerige Lösung des basischen Aluminiumchlorids einem Gehalt von ca. 23 - 24 % Al₂O₃ aufweist.

Als Ausgangsmaterial für die α-Al₂C₃-Keime wurde WSK3000, ein α-Aluminiumoxid der Fa. Treibacher Schleifmittel GmbH, Laufenburg (Deutschland) eingesetzt, das als leicht redispergierbares Sprühgranulat mit einer mittleren Partikelgröße der Primärteilchen von ca. 0.5 µm angeboten wird.

Das WSK3000 wurde einer etwa 3-stündigen Nassmahlung in einer Rührwerkskugelmühle unterzogen. Die erhaltene Suspension wurde anschließend in einem Klärseparator behandelt, wobei ca. 95 % des Feststoffanteils über eine Zentrifugalabscheidung abgetrennt wurde. Der in der Suspension verbliebene Feinstanteil hatte einen mittleren Partikeldurchmesser von ca. 50 nm (gemessen mit einem Rasterelektronenmikroskop Joel ISM 6400, bei 20.000-facher Vergrößerung) und wurde als Keim zu einem Anteil von 2 Gew.-%, bezogen auf den Anteil an Al₂O₃, der Suspension des Locron^{®} L zugesetzt.

Die so bekeimte Suspension wurde über einen Walzentrockner mit Hilfe von heißem Dampf bei einer Temperatur von ca. 120 °C getrocknet. Das getrocknete basische Aluminiumchlorid fiel dabei in Form von Schuppen mit einem mittleren Durchmesser von ca. 6 mm an.

Die erhaltenen Schuppen wurden anschließend für ca. 30 Minuten einer Temperaturbehandlung bei 1050 °C in einem indirekt, elektrisch beheizten Drehrohrofen, der mit einer Absaugung versehen war, unterzogen, wobei das basische Aluminiumchlorid unter Freisetzung von Salzsäure und Wasser zu α-Al₂O₃ zersetzt wurde. Die freigesetzte Salzsäure wurde zusammen mit dem Wasser in einem Wäscher aufgefangen und zu einer ca. 31 %igen Salzsäurelösung aufbereitet, die anschließend mit Aluminiummetall wieder zu basischem Aluminiumchlorid umgesetzt werden kann. Parallel zur Umsetzung im Drehrohrofen wurde eine kleine Probe des getrockneten und bekeimten Al₂(OH)₅Cl x 2-3 H₂O einer Differentialthermoanalyse unterzogen, deren Diagramm in Figur 1 wiedergegeben ist.

Das im Drehrohr erhaltene α-Al₂O₃ wurde röntgenographisch vermessen, wobei festgestellt wurde, dass sich das gesamte basische Aluminiumchlorid vollständig zu α-Al₂O₃ umgesetzt hatte. Das Röntgendiffraktogramm der Probe ist in der Figur 2 zu sehen.

Nach der Behandlung im Drehrohr lag das Produkt in Form von relativ weichen Agglomeraten aus α-Al₂O₃ vor, die zur Desagglomeration in einer Rührwerkskugelmühle (Drais, PMC 25 TEX, Bühler GmbH) einer Nassmahlung mit einer Mahldauer von ca. 3 Stunden unterzogen wurden. Zur Stabilisierung der Suspension wurden zu Beginn der Mahlung ein feinstdisperser Wachs zugegeben, mit dem während der Mahlung die Oberfläche der Nanoteilchen belegt wurde, wodurch eine erneute Agglomeratbildung verhindert werden konnte.

Die so erhaltene Suspension, die aus einzelnen Nanoteilchen mit einem mittleren Partikeldurchmesser von ca. 60 nm bestand, wurde über einen Sprühtrockner zu sehr weichen und lockeren Sprühagglomeraten mit einem mittleren Agglomeratdurchmesser von ca. 40 µm und einem mittleren Primärteilchendurchmesser von ca. 60 nm getrocknet. Die Restfeuchte des Sprühagglomerats betrug ca. 2 %.

Das Sprühagglomerat wurde anschließend ohne den Zusatz weiterer Additive in einem Kompaktor (CS 25, Hosokawa Bepex GmbH) zu etwa 50 mm langen und 10 mm dicken Pellets brikettiert, die als Grünkörper für die gewünschten Sinterkörper eingesetzt werden. Die Dichte der Grünkörper betrug 72 %, bezogen auf die theoretische Dichte. Damit besaßen die Grünkörper eine ausreichende Festigkeit, um noch vor dem anschließenden Sinterschritt auf eine Partikelgröße kleiner 6 mm zerkleinert werden zu können, ohne dass an dieser Stelle durch anfallenden Feinanteil (Staub) zu hohe Ausbeuteverluste für das spätere Schleifkorn entstanden.

Die Grünkörper wurden anschließend in einem direkt, mit Gas beheizten Drehrohrofen bei einer Temperatur von 1350 °C und einer Verweilzeit im Drehrohr von ca. 20 Minuten gesintert. Die Verweilzeit der Grünkörper in der heißesten Zone (im Kegel der Flamme) betrug dabei nur wenige Sekunden, so dass eine Art Schocksinterung durchgeführt wurde, mit deren Hilfe ein Kristallwachstum weitestgehend vermieden werden konnte.

Die erhaltenen α-Al₂O₃-Sinterkörper mit einem maximalen Durchmesser von ca. 4 mm wurden anschließend durch Sieben und Zerkleinern zu Schleifkörnungen aufbereitet.

Das Schleifkorn, das eine Dichte von 99,3 %, bezogen auf die theoretische Dichte, ein Vickershärte HV_{0.2} von 2230 GPa und ein nanokristallines Kristallitgefüge mit einer mittleren Primärkorngröße von 70 nm aufwies, wurde in Schleifmitteln auf Unterlagen und in gebundenen Schleifkörpern eingesetzt und getestet. Die Testergebnisse sind in den Tabellen 1 und 2 der Beispiele 5 und 6 zusammengefasst.

### Beispiel 2

Die Herstellung der mit Keimen versetzten Suspension des basischen Aluminiumchlorids, die anschließende Trocknung sowie die thermische Umsetzung zu α-Al₂O₃ erfolgte wie in Beispiel 1.

Bei der anschließenden etwa 3-stündigen Desagglomeration in der Rührwerkskugelmühle wurde jedoch kein Stabilisator für die Suspension zugegeben. Stattdessen wurde die Suspension direkt nach Beendigung der Desagglomeration zu einer ca. 6 mm dicken Schicht ausgegossen, im Vakuumtrockenschrank entgast (5 Stunden bei 200 mbar) und anschließend bei ca. 80 °C getrocknet. Das getrocknete Material wurde bei 500 °C für 30 Minuten vorkalziniert, anschließend auf Schleifkorngröße (6mm und feiner) zerkleinert. Die abschließende Sinterung erfolgte wie in Beispiel 1 im Drehrohrofen.

Das so erhaltene Schleifkorn besaß eine Dichte von 98.8 % der theoretischen Dichte, eine Vickershärte HV_{0.2} von 2190 GPa und eine mittlere Primärkorngröße von 70 nm. Wie auch das oben genannte Beispiel 1 wurde Beispiel 2 in Schleifmitteln auf Unterlage und in gebundenen Schleifmitteln getestet. Die Ergebnisse sind in den Tabellen 1 und 2 der Beispiele 5 und 6 zusammengefasst.

### Beispiel 3

Die Herstellung der mit Keimen versetzten Suspension des basischen Aluminiumchlorids, die anschließende Trocknung sowie die thermische Umsetzung zu α-Al₂O₃ erfolgte wie in Beispiel 1.

Bei der anschließenden etwa dreistündigen Desagglomeration in der Rückwerkskugelmühle wurde als Stabilisator für die Suspension eine Polyacrylsäure als Dispergierhilfe eingesetzt. Die Suspension mit einem Feststoffgehalt von ca. 30% wurde anschließend mit einer 10 % igen wässerigen Suspension eines Polyvinylalkohols als Binder (Mowiol 8-88, Kuraray Specialities Europe GmbH, Frankfurt, Deutschland) in einer Menge von ca. 0.05 Gew.-%, bezogen auf den Gehalt an Al₂O₃, versetzt.

Anschließend wurde die Suspension in einem Wirbelschicht-Sprühgranulator (AGT 150, Glatt GmbH, Binzen, Deutschland) bei einer Lufteintrittstemperatur von 95 °C, einer Schichttemperatur von 45 °C, einem Sprühdruck von 3 bar und einer Sprührate von 70 g/min granuliert. Zur Keimbildung wurde eine feine Granulatfraktion mit einer mittleren Granulatgröße von 0.2 mm eingesetzt, die bei einer vorangegangenen Wirbelschichtgranulation über eine in situ Keimbildung gewonnen worden war, eingesetzt. Die Abtrennung des gewünschten Granulats mit einem mittleren Granulatdurchmesser von 4 mm erfolgte über einen Zickzack-Sichter, der mit 9 Nm³/h Luft betrieben wurde. Die Dichte des Granulats lag bei ca. 75 % der theoretischen Dichte und die Restfeuchte betrug weniger als 1 %. Die Granulate wurden bei ca. 500 °C kalziniert, anschließend auf Schleifkorngröße zerkleinert und bei 1350 °C wie in Beispiel 1 im Drehrohrofen gesintert.

Das so erhaltene Schleifkorn besaß eine Dichte von 98.6 % der theoretischen Dichte, eine Vickershärte HV_{0.2} von 2210 GPa und eine mittlere Primärkorngröße von 60 nm. Wie auch die oben genannten Beispiele wurde Beispiel 3 in Schleifmitteln auf Unterlage und in gebundenen Schleifmitteln getestet. Die Ergebnisse sind in den Tabellen 1 und 2 der Beispiele 4 und 5 zusammengefasst.

### Beispiel 4

Die Herstellung der mit Keimen versetzten Suspension des basischen Aluminiumchlorids, die anschließende Trocknung sowie die thermische Umsetzung zu α-Al₂O₃ erfolgte wie Beispiel 1.

Bei der anschließenden etwa dreistündigen Desagglomeration in der Rührwerkskugelmühle wurde als Stabilisator ein Ammoniumsalz der Polyacrylsäure als Dispergierhilfe eingesetzt. Die Suspension wurde anschließend mit einer 20 %igen Lösung eines Polyvinylalkohols als Binder (Celvol 502, Celanese Chemicals, Frankfurt am Main) in einer Menge von ca. 0.5 Gew.-% bezogen auf den Al₂O₃ Gehalt, versetzt.

Anschließend wurde die Suspension in einem Vakuummischer (R08W VAC, Maschinenfabrik Gustav Eirich) zunächst bei 700 mBar, 110° C bei gleichlaufendem Mischwerkzeug bis zu einer pastösen Masse getrocknet. Dann wurde das Mischwerkzeug in Gegenlauf umgeschaltet und bei 600 bis 1600 1/min, 120° C, 850 mBar granuliert. Die Dichte des Granulates lag bei 75 % der theoretischen Dichte, die Restfeuchte bei ca. 2 %. Die Granulate wurden auf Schleifkorngröße zerkleinert, und bei 1350°C wie in Beispiel 1 im Drehrohrofen gesintert.

Das so erhaltene Schleifkorn besaß eine Dichte von 99,1 % der theoretischen Dichte, eine Vickershärte HV_{0.2} von 2190 GPa und eine mittlere primär Korngröße von 65 nm. Wie die vorgenannten Beispiele wurde Beispiel 4 in Schleifmitteln auf Unterlagen und in gebundenen Schleifmitteln getestet. Die Ergebnisse sind in den Tabellen 1 und 2 der Beispiele 5 und 6 zusammengefasst.

### Beispiel 5 (Bandtest)

Mit den in den Beispielen 1 bis 4 hergestellten Schleifkörnungen sowie einem handelsüblichen Sol-Gel-Korund (Cerpass XTL, Saint Gobain Industrial Ceramics) und einem handelsüblichen eutektischen Zirkonkorund (ZK40, Treibacher Schleifmittel GmbH, Laufenburg, Deutschland) als Vergleichsbeispielen wurden jeweils unter Verwendung einer Körnung P36 Schleifbänder hergestellt. Mit den Bändern wurde der Werkstoff 42CrMo4 bei einem Anpressdruck von 70 N mit einer Schleifzeit von 60 Minuten bearbeitet.

Die Abtragsleistungen sowie die entsprechenden prozentuale Schleifleistungen sind in der Tabelle 1 zusammengefasst.

**Tabelle 1**

| Schleifbedingungen (Bandschleifen) | Schleifkorntyp | Abschliff (g) | Schleifleistung (%) |
|---|---|---|---|
| **Werkstoff**: 42CrMo4, DIN 1.7225 | Sol-Gel-Korund | 4248 | 100 |
| (Vergütungsstahl) **Körnung**: P36 | Eutektischer Zirkonkorund | 3356 | 79 |
| **Anpressdruck**: 70 N Min | Beispiel 1 | 5645 | 133 |
| **Schleifzeit**: 60 **Geschwindigkeit**: 2500 rpm ∼ 33 m/s | Beispiel 2 | 5267 | 124 |
| | Beispiel 3 | 5710 | 134 |
| | Beispiel 4 | 5437 | 128 |

### Beispiel 6 (Scheibentest)

Mit den in den Beispielen 1 bis 3 hergestellten Schleifkörnungen wurde ein Schleiftest für Schleifscheiben durchgeführt. Zum Vergleich wurden die handelsüblichen Sol-Gel-Korunde Cerpass XTL (Saint Gobain Industrial Ceramics) und Cubitron 321 (3M, Abrasive Systems Division) herangezogen. Zur Herstellung der Schleifscheiben wurden die oben genannten Sinterkorunde jeweils in den Körnungen F60 mit Edelkorund Weiß in einem Verhältnis Sinterkorund : Edelkorund Weiß von 30 : 70 vermischt und in keramisch gebundenen Schleifscheiben eingesetzt.

Bearbeitet wurde der Werkstoff 16MnCr5. Nach dem Test wurde der G-Faktor (Quotient aus Abtragsmenge und Scheibenverschleiß) bestimmt.

Die G-Faktoren sowie die entsprechenden prozentualen Schleifleistungen sind in der Tabelle 2 zusammengefasst.

**Tabelle 2**

| Schleifbedingungen (Flachschleifen) | Schleifkorntyp | G-Faktor | Schleifleistung (%) |
|---|---|---|---|
| **Werkstoff:** 16MnCr5, DIN 1.17131 | Cubitron 321 | 178 | 100 |
| (Vergütungsstahl) **Körnung:** F60 | Cerpass | 164 | 92 |
| **Zustellung:**0.02 mm **Geschwindigkeit:** | Beispiel 1 | 276 | 155 |
| 2600 rpm ∼ 30 m/s **Vorschub:** 21 m/min | Beispiel 2 | 233 | 131 |
| **Abtragsfläche:** | Beispiel 3 | 245 | 138 |
| 20mm x 10mm | Beispiel 4 | 256 | 145 |

Wie aus den Ergebnissen der Schleiftests deutlich zu erkennen ist, sind die erfindungsgemäßen Schleifkörner den derzeit auf dem Markt erhältlichen konventionellen Schleifkörnern leistungsmäßig überlegen. Da zur Herstellung der Schleifkörner außerdem ein relativ preisgünstiger Rohstoff eingesetzt werden kann, der sich ohne großen technischen Aufwand zu α-Al₂O₃-Nanopartikeln umsetzen lässt, gelingt es mit dem erfindungsgemäßen Verfahren, einen preiswerten und leistungsstarken polykristallinen Sinterkorund herzustellen, der ein günstigeres Preis-/Leistungsverhältnis als die auf dem Markt erhältlichen Sol-Gel-Korunde aufweist.

## Patentansprüche

1. Verfahren zur Herstellung eines Sinterkörpers auf der Basis α-Al₂O₃ mit einem Gehalt von 95 bis 100 Gew.-% Al₂O₃, einer relativen Sinterdichte von ≥ 97 % der theoretischen Dichte und einer Vickers-Härte HV_{0.2} von ≥ 17.5 GPa, wobei der Sinterkörper ein Kristallitgefüge mit einer mittleren Primärkristallgröße der Al₂O₃-Kristalle von ≤ 100 nm aufweist,
**dadurch gekennzeichnet, dass** das Verfahren die folgenden Verfahrensschritte umfasst:
a) Herstellung eines nanokristallinen α-Al₂O₃-Pulvers mit einer mittleren Teilchengröße von ≤ 100 nm; wobei als Ausgangsstoff für das α-Al₂O₃-Pulver basisches Aluminiumchlorid mit der chemischen Formel Al₂(OH)ₙCl_{z}, wobei n eine Zahl zwischen 2.5 und 5.5 und z eine Zahl zwischen 3.5 und 0.5 ist und die Summe n + z stets 6 beträgt, eingesetzt wird, wobei das basische Aluminiumchlorid als wässerige Suspension zunächst mit feinstdispersen Kristallisationskeimen versetzt, anschließend getrocknet und dann einer thermischen Behandlung bei Temperaturen unterhalb von 1100 °C ausgesetzt wird, wobei die bei der thermischen Behandlung agglomerierten Nanopartikel in einem anschließenden Schritt durch eine Nassmahlung desagglomeriert werden, wobei die Desagglomeration als Nassmahlung in einer Attritormühle durchgeführt wird, wobei dem nanokristallinen α-Al₂O₃-Pulver während der Desagglomeration Additive, wie z.B. Presshilfsmittel, Sinteradditive, Bindemittel, Dispergierhilfen und/oder andere Zusatzstoffe, die eine Agglomeratbildung verhindern, zugesetzt werden;
b) Verdichten des α-Al₂O₃-Pulvers mittels eines keramischen Formgebungsverfahrens zu einem Grünkörper mit einer Dichte ≥ 60 % der theoretischen Dichte; und
c) Sintern des Grünkörpers in einem Temperaturbereich zwischen 1200 und 1500 °C, wobei die Grünkörper bei der Sinterung in ≤ 60 Sekunden auf die erforderliche Sintertemperatur gebracht werden und die Verweilzeit in der heißen Zone ≤ 30 Minuten beträgt, wobei die Sinterung in einem Drehrohrofen durchgeführt wird.

2. Verfahren nach einem Anspruch 1,
**dadurch gekennzeichnet, dass** als Kristallisationskeime feinstdisperse α-Al₂O₃-Keime eingesetzt werden.

3. Verfahren nach Anspruch 2,
**dadurch gekennzeichnet, dass** die eingesetzten feinstdispersen α-Al₂O₃-Keime eine mittlere Teilchengröße von weniger als 0.1 µm aufweisen.

4. Verfahren nach Anspruch 1,
**dadurch gekennzeichnet, dass** als Kristallisationskeime feinstdisperses α-Fe₂O₃ eingesetzt wird.

5. Verfahren nach einem der Ansprüche 1 bis 4,
**dadurch gekennzeichnet, dass** neben dem basischen Aluminiumchlorid ein oder mehrere weitere Oxidbildner in der Ausgangssuspension enthalten sind.

6. Verfahren nach Anspruch 5,
**dadurch gekennzeichnet, dass** als Oxidbildner die Chloride, Oxychloride, Hydroxychloride und/oder Nitrate eines oder mehrerer Vertreter aus der Gruppe Fe, Cu, Ni, Zn, Co, Sr, Ba, Be, Mg, Ca, Li, Cr, Si, Mn, Hf, Zr, Ti, V, Ga, Nb, B und/oder Seltene Erden eingesetzt werden.

7. Verfahren nach Anspruch 5 oder 6,
**dadurch gekennzeichnet, dass** die Menge an eingesetztem Oxidbildner maximal 5 Gew.-%, berechnet als Oxid und bezogen auf den Feststoffgehalt an Al₂O₃ im Endprodukt, beträgt.

8. Verfahren nach einem der Ansprüche 1 bis 9,
**dadurch gekennzeichnet, dass** die thermische Behandlung ein konventionelles Sinterverfahren ist, wobei die Suspension zunächst getrocknet und das getrocknete Produkt anschließend gesintert wird.

9. Verfahren nach einem der Ansprüche 1 bis 7,
**dadurch gekennzeichnet, dass** die thermische Behandlung ein thermophysikalisches Verfahren, wie z.B. Spraypyrolyse, Plasmasynthese oder eine Verdampfung im Heißwandreaktor, ist.

10. Verfahren nach einem der Ansprüche 1 bis 9,
**dadurch gekennzeichnet, dass** dem nanokristallinen Pulver während der Desagglomeration feinstdisperse Wachse und/oder Stearate zugesetzt werden.

11. Verfahren nach einem der Ansprüche 1 bis 10,
**dadurch gekennzeichnet, dass** die nach der Desagglomeration mit Hilfe einer Nassmahlung erhaltene Suspension einer Trocknung über ein beliebiges Trocknungsverfahren unterzogen wird, wobei ein nanokristallines Pulver auf Basis von α-Al₂O₃ erhalten wird.

12. Verfahren nach Anspruch 11,
**dadurch gekennzeichnet, dass** die Trocknung eine Sprühtrockung ist.

13. Verfahren nach einem der Ansprüche 1 bis 10,
**dadurch gekennzeichnet, dass** das keramische Formgebungsverfahren ein Schlickerguss ist, wobei der bei der Nassmahlung erhaltene Schlicker des nanokristallinen α-Al₂O₃-Pulvers drucklos in einen Behälter gegossen, dort entgast und zu einem Grünkörper getrocknet wird.

14. Verfahren nach einem der Ansprüche 1 bis 10,
**dadurch gekennzeichnet, dass** das keramische Formgebungsverfahren eine Sprühgranulierung ist, wobei die bei der Nassmahlung erhaltene Suspension mit einem Binder versetzt und anschließend einer Sprühgranulierung unterzogen wird.

15. Verfahren nach einem der Ansprüche 1 bis 10,
**dadurch gekennzeichnet, dass** das keramische Formgebungsverfahren eine Agglomeration ist, wobei die bei der Nassmahlung erhaltene Suspension mit einem Binder versetzt und anschließend in einem Vakuummischer zu Granulaten verarbeitet wird.

16. Verfahren nach Anspruch 12,
**dadurch gekennzeichnet, dass** keramische Formgebungsverfahren ein Pulverpressverfahren ist, wobei das nanokristalline α-Al₂O₃-Pulver mittels eines Kompaktors zu einem Grünkörper verpresst wird.

17. Verfahren nach Anspruch 12,
**dadurch gekennzeichnet, dass** das keramische Formgebungsverfahren ein Extrusionsverfahren ist, wobei das nanokristalline α-Al₂O₃-Pulver mit mindestens einem Binder und einem Lösungsmittel zu einer extrudierbaren Masse verarbeitet und anschließend zu einem Grünkörper extrudiert wird.

18. Verfahren nach einem der Ansprüche 1 bis 17,
**dadurch gekennzeichnet, dass** die Grünkörper auf einen Partikeldurchmesser von ≤ 6 mm zerkleinert, anschließend in einem Temperaturbereich zwischen 1200 °C und 1500 °C gesintert werden und das gesinterte Produkt durch weitere Zerkleinerung und Siebung zu Schleifkörnern aufbereitet wird.

## Claims

1. A method of producing a sintered body based on α-Al₂O₃ with a content of from 95 to 100 % by weight Al₂O₃, a relative sintering density of ≥ 97 % of the theoretical density and a Vickers hardness HV_{0.2} of ≥ 17.5 GPa, wherein the sintered body has a crystallite structure with an average primary crystal size of the Al₂O₃ crystals of ≤ 100 nm,
**characterized in that** the method comprises the following steps:
a) production of a nanocrystalline α-Al₂O₃ powder with an average particle size of ≤ 100 nm, wherein basic aluminium chloride with the chemical formula Al₂(OH)ₙCl_{z} is used as the starting material for the α-Al₂O₃ powder, in which n is a number between 2.5 and 5.5 and z is a number between 3.5 and 0.5 and the sum n + z always amounts to 6, wherein the basic aluminium chloride is first mixed as an aqueous suspension with very finely dispersed crystallization nuclei, is then dried and is next subjected to a thermal treatment at temperatures of below 1100°C, wherein the nanoparticles agglomerated during the thermal treatment are deagglomerated by wet grinding in a following step, wherein the deagglomeration is carried out as wet grinding in an attritor mill, wherein additives, such as for example pressing aids, sintering additives, binding agents, dispersion aids and/or other additives which prevent the formation of agglomerates, are added to the nanocrystalline α-Al₂O₃ powder during the deagglomeration;
b) compression of the α-Al₂O₃ powder by means of a ceramic shaping procedure to form a green body with a density of ≥ 60 % of the theoretical density, and
c) sintering the green body in a temperature range of between 1200 and 1500°C, wherein the green bodies are brought to the required sintering temperature in ≤ 60 seconds during the sintering and the dwell period in the hot zone amounts to ≤ 30 minutes, wherein the sintering is carried out in a rotary drum furnace.

2. A method according to claim 1, **characterized in that** very finely dispersed α-Al₂O₃ nuclei are used as the crystallization nuclei.

3. A method according to claim 2, **characterized in that** the very finely dispersed α-Al₂O₃ nuclei used have an average particle size of less than 0.1 µm.

4. A method according to claim 1, **characterized in that** very finely dispersed α-Fe₂O₃ is used as the crystallization nuclei.

5. A method according to any one of claims 1 to 4, **characterized in that** as well as the basic aluminium chloride one or more further oxide formers are contained in the initial suspension.

6. A method according to claim 5, **characterized in that** the chlorides, oxychlorides, hydroxychlorides and/or nitrates of one or more representatives of the group Fe, Cu, Ni, Zn, Co, Sr, Ba, Be, Mg, Ca, Li, Cr, Si, Mn, Hf, Zr, Ti, V, Ga, Nb, B and/or rare earths are used as the oxide formers.

7. A method according to claim 5 or 6, **characterized in that** the quantity of oxide former used amounts to a maximum of 5 % by weight, calculated as oxide and with respect to the solids content of Al₂O₃ in the end product.

8. A method according to any one of claims 1 to 9 [sic], **characterized in that** the thermal treatment is a conventional sintering method, wherein the suspension is first dried and the dried product is then sintered.

9. A method according to any one of claims 1 to 7, **characterized in that** the thermal treatment is a thermophysical method, such as for example spray pyrolysis, plasma synthesis or an evaporation in a hot wall reactor.

10. A method according to any one of claims 1 to 9, **characterized in that** very finely dispersed waxes and/or stearates are added to the nanocrystalline powder during the deagglomeration.

11. A method according to any one of claims 1 to 10, **characterized in that** the suspension obtained after the deagglomeration with the aid of wet grinding is subjected to a drying by way of any desired drying method, wherein a nanocrystalline powder based upon α-Al₂O₃ is obtained.

12. A method according to claim 11, **characterized in that** the drying is a spray drying.

13. A method according to any one of claims 1 to 10, **characterized in that** the ceramic shaping method is slip casting, wherein the slip of the nanocrystalline α-Al₂O₃ powder obtained during the wet grinding is poured without pressure into a container, is degassed there and is dried to form a green body.

14. A method according to any one of claims 1 to 10, **characterized in that** the ceramic shaping method is spray granulation, wherein the suspension obtained during the wet grinding is mixed with a binder and is then subjected to spray granulation.

15. A method according to any one of claims 1 to 10, **characterized in that** the ceramic shaping method is agglomeration, wherein the suspension obtained during the wet grinding is mixed with a binder and is then processed in a vacuum mixer to form granulates.

16. A method according to claim 12, **characterized in that** the ceramic shaping method is a powder pressing method, wherein the nanocrystalline α-Al₂O₃ powder is pressed to form a green body by means of a compactor.

17. A method according to claim 12, **characterized in that** the ceramic shaping method is an extrusion method, wherein the nanocrystalline α-Al₂O₃ powder is processed with at least one binder and one solvent to form a compound capable of being extruded and is then extruded to form a green body.

18. A method according to any one of claims 1 to 17, **characterized in that** the green body is reduced in size to a particle diameter of ≤ 6 mm, is then sintered in a temperature range of between 1200°C and 1500°C, and the sintered product is worked up by further reduction in size and sifting to form abrasive grains.

## Revendications

1. Procédé de préparation d'un corps fritté à base d'α-Al₂O₃ ayant une teneur de 95 à 100 % en poids d'α-Al₂O₃, une densité frittée relative de ≥ 97 % de la densité théorique et une dureté de Vickers HV_{0.2} de ≥ 17,5 GPa, ce corps fritté comportant une structure de cristallite ayant une dimension de cristal primaire moyenne des cristaux de Al₂O3 de ≤ 100 nm,
**caractérisé en ce que**
ce procédé comporte les étapes suivantes:
a) préparation d'une poudre nanocristalline d'α-Al₂O₃ ayant une granulométrie moyenne de ≤ 100 nm, étant précisé qu'en tant que produit de départ pour la poudre d'α-Al₂O₃, on utilise un chlorure d'aluminium basique de formule chimique Al₂(OH)ₙCl_{z}, n étant un nombre compris entre 2,5 et 5,5 et z un nombre compris entre 3,5 et 0,5 et la somme n + z étant toujours égale à 6, que le chlorure d'aluminium basique est tout d'abord mis en réaction sous la forme d'une suspension aqueuse avec des germes de cristallisation finement dispersés, et ensuite séché, puis soumis à un traitement thermique à des températures inférieures à 1100°C, que, lors du traitement thermique, des nanoparticules agglomérées sont désagglomérées dans une étape ultérieure par broyage humide, et que la désagglomération constituée par un broyage humide est mise en oeuvre dans un broyeur à attrition, des additifs tels que par exemple des adjuvants de compression, des additifs de frittage, des liants, des adjuvants de dispersion et/ou d'autres additifs qui empêchent la formation d'agglomérat, étant ajoutés à la poudre d'α-Al₂O₃ nanocristalline, pendant la désagglomération,
b) compactage de la poudre α-Al₂O₃ au moyen d'un procédé de formage céramique de façon à obtenir un corps vert ayant une densité ≥ 60 % de la densité théorique, et
c) frittage du corps vert dans une plage de température comprise entre 1200 et 1500°C, étant précisé que lors du frittage, le corps vert est amené en ≤ 60 secondes à la température de frittage nécessaire, et que le temps de séjour dans la zone chaude est de
≤30 minutes, le frittage étant mis en oeuvre dans un four tubulaire tournant.

2. Procédé conforme à la revendication 1,
**caractérisé en ce que**
en tant que germes de cristallisation, on met en oeuvre des germes d'α-Al₂O₃ finement dispersés.

3. Procédé conforme à la revendication 2,
**caractérisé en ce que**
les germes d'α-Al₂O₃ finement dispersés mis en oeuvre présentent une granulométrie moyenne inférieure à 0,1µm.

4. Procédé conforme à la revendication 1,
**caractérisé en ce que**
en tant que germes de cristallisation, on met en oeuvre du α-Fe₂O₃ finement dispersé.

5. Procédé selon l'une des revendications 1 à 4,
**caractérisé en ce que**
outre le chlorure d'aluminium basique, un ou plusieurs autres agents de formation d'oxydes sont renfermés dans la suspension de départ.

6. Procédé conforme à la revendication 5,
**caractérisé en ce que**
en tant qu'agents de formation d'oxydes, on met en oeuvre des chlorures, oxychlorures, hydroxychlorures, et/ou nitrates d'un ou de plusieurs représentants du groupe formé par Fe, Cu, Ni, Zn, Co, Sr, Ba, Be, Mg, Ca, Li, Cr, Si, Mn, Hf, Zr, Ti, V, Ga, Nb, B et/ou les terres rares.

7. Procédé conforme à la revendication 5 ou 6,
**caractérisé en ce que**
la quantité d'agents de formation d'oxydes mise en oeuvre s'élève au maximum à 5 % en poids calculé en tant qu'oxyde et par rapport à la teneur de matières solides en Al₂O₃ dans le produit final.

8. Procédé conforme à l'une des revendications 1 à 9,
**caractérisé en ce que**
le traitement thermique est un procédé de frittage conventionnel, la suspension étant tout d'abord séchée et le produit séché étant ensuite fritté.

9. Procédé conforme à l'une des revendications 1 à 7,
**caractérisé en ce que**
le traitement thermique est un procédé thermophysique tel que par exemple la pyrolyse par pulvérisation, la synthèse par plasma ou un procédé de vaporisation dans un réacteur à paroi chaude.

10. Procédé conforme à l'une des revendications 1 à 9,
**caractérisé en ce que**
pendant la désagglomération on ajoute de la cire et/ou un stéarate finement dispersé à la poudre nanocristalline.

11. Procédé conforme à l'une des revendications 1 à 10,
**caractérisé en ce que**
la suspension obtenue après la désagglomération par broyage humide est soumise à un séchage par un procédé de séchage quelconque, une poudre nanocristalline à base de α-Al₂O₃ étant obtenue.

12. Procédé conforme à la revendication 11,
**caractérisé en ce que**
le séchage est un séchage par pulvérisation.

13. Procédé conforme à l'une des revendications 1 à 10,
**caractérisé en ce que**
le procédé de formage céramique est une coulée en barbotine, étant précisé que la barbotine de poudre d'α-Al₂O₃ nanocristalline obtenue lors du broyage humide est coulée à la pression atmosphérique dans un récipient, puis dégazée et séchée de façon à obtenir un corps vert.

14. Procédé conforme à l'une des revendications 1 à 10,
**caractérisé en ce que**
le procédé de formage céramique est une granulation par pulvérisation, étant précisé que la suspension obtenue lors du broyage humide est mise en réaction avec un liant puis soumise à une granulation par pulvérisation.

15. Procédé conforme à l'une des revendications 1 à 10,
**caractérisé en ce que**
le procédé de formage céramique est une agglomération, étant précisé que la suspension obtenue lors du broyage humide est mise en réaction avec un liant puis traitée dans un mélangeur sous vide de façon à obtenir des granulés.

16. Procédé conforme à la revendication 12,
**caractérisé en ce que**
le procédé de formage céramique est un procédé de compression de poudre, étant précisé que la poudre d'α-Al₂O₃ nanocristalline est comprimée au moyen d'un compacteur de façon à obtenir un corps vert.

17. Procédé conforme à la revendication 12,
**caractérisé en ce que**
le procédé de formage céramique est un procédé d'extrusion, étant précisé que la poudre d'α-Al₂O₃ nanocristalline est traitée avec au moins un liant et un solvant pour obtenir une masse susceptible d'être extrudée puis extrudée de façon à obtenir un corps vert.

18. Procédé conforme à l'une des revendications 1 à 17,
**caractérisé en ce que**
le corps vert est broyé à une granulométrie de ≤ 6 mm, puis fritté dans une plage de température comprise entre 1200 et 1500°C, et le produit fritté est traité par broyage ultérieur et tamisage de façon à obtenir des particules abrasives.
